# EUROPÄISCHE PATENTSCHRIFT

(11) **EP 3 096 175 B1**
(45) Veröffentlichungstag und Bekanntmachung des Hinweises auf die Patenterteilung: **21.07.2021**
(21) Anmeldenummer: 16170444.0
(22) Anmeldetag: 19.05.2016
(51) Int. Cl.: G02B 23/16, G02B 23/18, H01R 13/625, H01R 13/639, H01R 24/38

(54) **FERNGLAS MIT EINEM GEHÄUSE UND EINEM TRAGEGURT**
BINOCULARS WITH A HOUSING AND A CARRYING STRAP
JUMELLES COMPRENANT UN BOITIER ET UNE SANGLE DE TRANSPORT

(30) Priorität: 19.05.2015 AT 5009015 U; 19.05.2015 DE 202015003640 U
(43) Veröffentlichungstag der Anmeldung: 23.11.2016
(73) Patentinhaber: Swarovski-Optik KG., 6067 Absam (AT)
(72) Erfinder: HEINRICH, Christoph, 6071 Aldrans (AT); FRECH, Christoph, 6065 Thaur (AT); ZANGERL, Rene, 6060 Hall (AT)
(74) Vertreter: Burger, Hannes

(56) Entgegenhaltungen:
- EP-A1- 2 241 935
- EP-A2- 2 124 476
- WO-A1-01/06298
- WO-A1-97/02630
- WO-A1-2014/155431
- CA-A1- 2 762 400
- DE-A1-102010 003 878
- JP-A- H09 127 431
- US-A- 4 026 618
- US-A- 4 153 362
- US-A- 5 036 343
- US-A1- 2004 046 953
- US-A1- 2013 192 073
- US-A1- 2013 253 820
- US-B2- 7 869 004

## Beschreibung

Die Erfindung betrifft ein Fernglas, mit einem Gehäuse und zumindest einer Halterung für einen Tragegurt. Üblicherweise werden Riemen zum Tragen einer fernoptischen Einrichtung, beispielsweise eines Fernglases, in Ösen befestigt, die fix mit einem Gehäuse der fernoptischen Einrichtung verbunden sind und zum Einhängen eines flachen Trageriemens dienen. Nachteilig an der bekannten Lösung ist vor allem, dass es im Gebrauch des Fernrohres zu einem Verdrillen des Riemens kommen kann.

Fernoptische Einrichtungen, wie Ferngläser, werden heutzutage mehr und mehr mit elektronischen Zusatzfunktionen ausgestattet. Solche elektronisch gesteuerten Zusatzfunktionen sind beispielsweise ein Laser-Entfernungsmesser, eine Kamera oder - insbesondere im jagdlichen Bereich - auch die Integration eines Ballistikrechners. Solche elektronischen Komponenten erfordern naturgemäß eine entsprechende Stromversorgung für diese Zusatzeinrichtungen selbst, aber auch für zusätzliche Komponenten, beispielsweise für die Datenübertragung mit externen Geräten. Trotz der Integration von zusätzlichen elektronisch gesteuerten Funktionalitäten ist es wünschenswert, das Gewicht des in den Händen zu haltenden Fernglases möglichst gering und seine Baugröße kompakt zu halten. Mehr und mehr ist auch eine Nachfrage nach Geräten zu bemerken, bei denen Zusatzfunktionen später nach Wunsch nachgerüstet werden können.

Das Dokument US 2013/192073 A1 beschreibt ein Verfahren zur Anzeige eines Ziels mit einem Fernrohr bzw. mit einem Binokular unter Verwendung eines Laserpointers. Dazu wird ein Laserpointer am Gehäuse eines Fernglases befestigt und dessen Laserstrahlrichtung parallel zu der optischen Achse des Fernglases ausgerichtet. Mit einem so ausgerüsteten Fernglas kann eine Begleitperson einen Jäger ein einzelnes zu erlegendes Tier aus einem Rudel mehrerer Wildtiere direkt anzeigen. Dazu richtet die Begleitperson, beispielsweise ein Jagdaufseher, das Fernglas auf das ausgewählte Tier und bringt mithilfe des Laserpointers auf diesem einen Lichtpunkt zum Aufleuchten. Zur Stromversorgung des Laserpointers ist eine Batterie vorges ehen, die entweder über ein Stromkabel verbunden und extern angeordnet ist oder die in dem Gehäuse des Laserpointers integriert ist.

Das Dokument JP H09 127431 A beschreibt ein Fernglas mit einem Funkempfänger, einem Riemen bzw. einem Tragegurt und einem mit dem Fernglas über ein Kabel und einen Klinkenstecker verbundenen Kopfhörer. Das Kabel des Kopfhörers verläuft dabei über einen Teilabschnitt der Länge des Trageriemens im Inneren des Trageriemens. Durch an den beiden Seiten des Fernglases angeordnete Bügel des Fernglasgehäuses sind die beiden Enden des Tragegurts schlaufenartig mit dem Fernrohrgehäuse verbunden. Zur elektrischen Verbindung des Kopfhörers ist in dem Fernrohrgehäuse eine Buchse für den Klinkenstecker des Kopfhörerkabels vorgesehen.

Es ist die Aufgabe der Erfindung ein System aus einem Fernglas mit elektronisch gesteuerten Funktionen und aus einem Tragegurt zu schaffen, das bedienerfreundlich ist und insbesondere eine bedienerfreundliche Gewichtsverteilung seiner Komponenten aufweist.

Diese Aufgabe wird durch ein Fernglas, mit einem Gehäuse und mit einem Tragegurt gelöst, wobei zwischen dem Gehäuse und dem Tragegurt zumindest eine Halterung zur mechanischen Verbindung ausgebildet ist, und wobei die zumindest eine Halterung eine Schnittstelle zur elektrischen bzw. elektronischen Verbindung zwischen dem Gehäuse und dem Tragehilfsmittel umfasst. Dies hat den Vorteil, dass dadurch die mechanische als auch die elektrische Verbindung durch eine einzige Manipulation komfortabel hergestellt oder gelöst werden kann

Von Vorteil ist auch, wenn in dem Gehäuse und in dem Tragegurt jeweils elektrische bzw. elektronische Komponenten angeordnet sind, da dadurch eine günstige Gewichtsverteilung erreicht werden kann.

Vorteilhaft wird die Schnittstelle zur elektrischen bzw. elektronischen Verbindung durch Kontaktstellen und im verbundenen Zustand damit in elektrischer Verbindung stehenden Kontaktstiften gebildet.

Gemäß einer bevorzugten Ausführungsform ist vorgesehen, dass die Schnittstellen zur elektrischen bzw. elektronischen Verbindung durch Kontaktstellen, die an einander gegenüberliegenden Seiten, insbesondere an einander gegenüberliegenden, kreisringscheibenförmigen Seiten, des Halterungsgehäuses und des ersten Teils des Gehäuses angeordnet sind, ausgebildet sind.

Vorteilhaft ist auch die Weiterbildung, bei der die Kontaktstellen durch Kontaktöffnungen, insbesondere kreisbogenförmige Kontaktöffnungen, und in die Kontaktöffnungen hineinragende Kontaktstifte ausgebildet sind.

Alternativ oder zusätzlich kann vorgesehen sein, dass die Schnittstellen zur elektrischen bzw. elektronischen Verbindung durch Schleifringe an einer äußeren Mantelfläche der Buchse und durch Stromabnehmer in einer Durchtrittsöffnung des Halterungsgehäuses ausgebildet sind.

Gemäß einer vorteilhaften Ausführungsvariante sind die Schnittstellen zur elektrischen bzw. elektronischen Verbindung durch Induktionsschleifen, die an einander gegenüberliegenden, kreisringscheibenförmigen Seiten des Halterungsgehäuses und des ersten Teils des Gehäuses angeordnet sind, ausgebildet.

In einer weiteren alternativen Ausbildungsform sind die Schnittstellen zur elektrischen bzw. elektronischen Verbindung durch Spulen, die an einer äußeren Mantelfläche der Buchse und in einer Durchtrittsöffnung des Halterungsgehäuses und koaxial zueinander angeordnet sind, ausgebildet.

Vorteilhaft ist auch, wenn in dem Tragegurt eine Energieversorgungseinheit angeordnet ist.

Schließlich ist es von Vorteil, wenn in dem Tragegurt eine elektronische Komponente angeordnet ist, die aus einer Gruppe, umfassend eine Steuerung, eine Eingabe, eine Anzeige, ein GPS-Empfänger, einen Temperatursensor, ein Luftdrucksensor, ein Mikrofon, einen Lautsprecher, einen Datenspeicher, einen Beschleunigungssensor, einen Kompass, einen Vibrationsmotor, Solarzellen, eine Antenne und ein Terminal zur leitungsgebundenen elektrischen Verbindung, ausgewählt ist.

Gemäß einer bevorzugten Ausführungsform ist in dem Gehäuse ein Laserentfernungsmesser oder eine Kamera angeordnet.

Von Vorteil ist besonders, wenn der Riemen mit einem drehbar gelagerten Halterungsgehäuse der Halterung verbunden und über dieses an dem Gehäuse drehbar befestigt ist. Durch die drehbare Anbindung des Riemens an dem Gehäuse kann ein Verdrillen des Riemens bei sehr effizient unterbunden werden. Besonders bevorzugt ist das Halterungsgehäuse frei drehbar an dem Gehäuse der fernoptischen Einrichtung gelagert.

Gemäß einer vorteilhaften Weiterbildung der Erfindung ist das Halterungsgehäuse um eine normal zu einer Oberfläche des Gehäuses verlaufende Achse drehbar gelagert.

Bei einer bevorzugten Variante der Erfindung kann es vorgesehen sein, dass das Halterungsgehäuse um eine Buchse drehbar gelagert ist.

Ein einfaches Befestigen und Lösen des Riemens lässt sich dadurch erzielen, dass die zumindest eine Halterung zumindest einen fix an dem Gehäuse angeordneten ersten Teil und zumindest einen lösbar mit dem zumindest einen ersten Teil verbindbaren zweiten Teil aufweist, wobei der zumindest eine erste Teil und der zumindest eine zweite Teil einen Bajonett-Verschluss bilden. Diese Variante der Erfindung ermöglicht ein rasches und einfaches Austauschen des Riemens. Auch kann der Riemen, wenn er nicht benötigt wird, auf einfache Weise von dem Gehäuse abmontiert werden.

Besonders vorteilhaft ist es, wenn die Buchse an dem zumindest einen ersten, fix an dem Gehäuse angeordneten Teil angeordnet ist.

Die Bedienung der Halterung lässt sich dadurch erleichtern, dass der zumindest eine zweite Teil einen Schaft sowie einen den Schaft in radialer Richtung überragenden Kopf aufweist.

Gemäß einer vorteilhaften Variante der Erfindung kann es vorgesehen sein, dass der zumindest eine zweite Teil zumindest eine an dem Schaft angeordnete und von diesem in radialer Richtung abstehende Haltenase aufweist.

Eine Ausführungsform, bei welcher ein besonders zuverlässiger Halt des zweiten Teils in dem ersten Teil der Halterung gewährleistet ist, besteht darin, dass der zumindest eine zweite Teil zumindest zwei einander gegenüberliegende Haltenasen aufweist.

Ein einfacher und in produktionstechnischer Hinsicht vorteilhafter Aufbau des zweiten Teils lässt sich dadurch erzielen, dass die zumindest zwei Haltenasen einstückig miteinander ausgebildet und durch ein an einer Stirnseite des Schaftes angeordnetes balkenförmiges Element gebildet sind.

Eine gute Fixierung des zweiten Teils gegen ein Verrutschen in einer parallel zu einer Längsmittelachse des Schaftes verlaufenden Richtung kann dadurch erreicht werden, dass der Schaft in einem unmittelbar vor der zumindest einen Haltenase gelegenen Abschnitt einen kleineren Durchmesser aufweist, als in einem an diesen Abschnitt in Richtung des Kopfes betrachtet unmittelbar anschließenden Bereich.

Weiters kann der Schaft in einem zwischen der zumindest einen Haltenase und dem Kopf gelegenen Bereich einen in radialer Richtung abstehenden Flansch aufweisen, der insbesondere einen in Umfangsrichtung des Schaftes umlaufenden Kragen bildet.

Besonders vorteilhaft ist es, wenn die Halterung zumindest ein an dem zumindest einen zweiten Teil fixiertes Halterungsgehäuse, aufweist.

Eine gute Fixierung des Halterungsgehäuses an dem zweiten Teil lässt sich dadurch bewerkstelligen, dass das Halterungsgehäuse eine Durchtrittsöffnung für den Schaft aufweist, wobei in einem Bereich der Durchtrittsöffnung zumindest ein in die Durchtrittsöffnung ragender Steg aus einem elastomeren Material angeordnet ist, wobei ein Durchmesser des Schaftes im Bereich des Flansches größer ist als ein lichter Querschnitt der Durchtrittsöffnung im Bereich des zumindest einen Steges. Bei dieser Ausführungsform kann ein ungewolltes Lösen des zweiten Teils von dem Halterungsgehäuse entgegen einer Schließrichtung der Halterung verhindert werden, da der Flansch, nachdem er den Steg der Durchtrittsöffnung passiert hat, von diesem entgegen der Schließrichtung blockiert ist.

Besonders vorteilhaft ist es, wenn das Halterungsgehäuse aus zumindest zwei Halbschalen gebildet ist, wobei der Riemen zwischen den beiden Halbschalen eingeklemmt ist. Auf diese Weise lässt sich der Riemen besonders einfach mit dem Gehäuse verbinden und wieder von diesem lösen.

Alternativ oder zusätzlich zu der oben genannten Lösung kann an dem Halterungsgehäuse zumindest eine Öse angeordnet sein. Diese Öse kann ebenfalls zur Befestigung des Riemens dienen.

Bei einer Variante der Erfindung, welche sich durch eine große Zuverlässigkeit und einen einfachen Aufbau auszeichnet, kann es vorgesehen sein, dass der zumindest eine erste Teil der Halterung eine Durchtrittsöffnung in Form eines Langloches für die zumindest eine Haltenase des zumindest einen zweiten Teils aufweist, wobei eine Breite der Durchtrittsöffnung kleiner als ein Durchmesser einer Projektion der Haltenase und des Schaftes in eine normal zu einer Längsmittelgerade des Schaftes verlaufende Ebene ist. Bei dieser Variante ist der Abstand zwischen den freien Stirnseiten der Haltenasen größer als die Breite der Durchtrittsöffnung. Dadurch ist gewährleistet, dass bei Verdrehen des zweiten Teils nach Passieren der Haltenasen der Durchtrittsöffnung die Haltenasen in eine Position gebracht sind, in welcher sie die Durchtrittsöffnung nicht mehr passieren können und somit den ersten Teil in dem zweiten Teil fixieren.

Um ein ungewolltes Lösen des zweiten Teils von dem ersten Teil der Halterung zu verhindern, kann es vorgesehen sein, dass der zumindest eine erste Teil in einer Einführrichtung des Schaftes durch die Durchtrittsöffnung betrachtet zumindest eine nach der Durchtrittsöffnung angeordnete Feder, insbesondere eine Blattfeder, aufweist, wobei die zumindest eine Haltenase des zumindest einen zweiten Teils in einem verriegelten Zustand des Bajonett-Verschlusses zwischen einem an einen Rand der Durchtrittsöffnung anschließenden Bereich und der zumindest einen Feder eingeklemmt ist.Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer erfindungsgemäßen Halterung, die auf einem Gehäuse einer fernoptischen Einrichtung montiert ist;
- Fig. 2: eine perspektivische Ansicht eines ersten Teils der Halterung aus Fig. 1;
- Fig. 3: eine perspektivische Ansicht eines zweiten Teils der Halterung aus Fig. 1;
- Fig. 4: einen teilweisen Schnitt entlang der Linie IV-IV in Fig. 1;
- Fig. 5: eine perspektivische Ansicht eines Halterungsgehäuses der Halterung aus Fig. 1;
- Fig. 6: eine perspektivische Ansicht des ersten und des zweiten Teils der Halterung aus Fig. 1 in einem geöffneten Zustand;
- Fig. 7: eine perspektivische Ansicht einer weiteren Variante eines Halterungsgehäuses;
- Fig. 8: eine perspektivische Ansicht einer erfindungsgemäßen Halterung, die auf einem Gehäuse einer fernoptischen Einrichtung montiert ist, wobei die Halterung das Halterungsgehäuse aus Fig. 7 aufweist;
- Fig. 9: eine perspektivische Ansicht einer Unterseite des ersten Teils der Halterung aus Fig. 1;
- Fig. 10: der erste Teil der Halterung aus Fig. 8 mit einer eingesetzten Feder;
- Fig. 11: die mit dem Riemen verbundene fernoptischen Einrichtung, perspektivisch dargestellt;
- Fig. 12: einen Querschnitt einer der beiden Halterungen an der fernoptischen Einrichtung, gemäß Fig. 11;
- Fig. 13: die Halterung mit einer elektrischen Schnittstelle gemäß einem weiteren Ausführungsbeispiel in Explosionsdarstellung;
- Fig. 14: das Halterungsgehäuse der Halterung, gemäß Fig. 13;
- Fig. 15: die Halterung mit einer elektrischen Schnittstelle gemäß einem weiteren Ausführungsbeispiel in Explosionsdarstellung;
- Fig. 16: das Halterungsgehäuse und den zweiten Teil der Halterung, gemäß Fig. 15;
- Fig. 17: die Halterung mit einer drahtlosen elektrischen Schnittstelle gemäß einem weiteren Ausführungsbeispiel in Explosionsdarstellung;
- Fig. 18: das Halterungsgehäuse und den zweiten Teil der Halterung, gemäß Fig. 17;
- Fig. 19: die Halterung mit einer drahtlosen elektrischen Schnittstelle gemäß einem weiteren Ausführungsbeispiel in Explosionsdarstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

### FIGURENBESCHREIBUNG

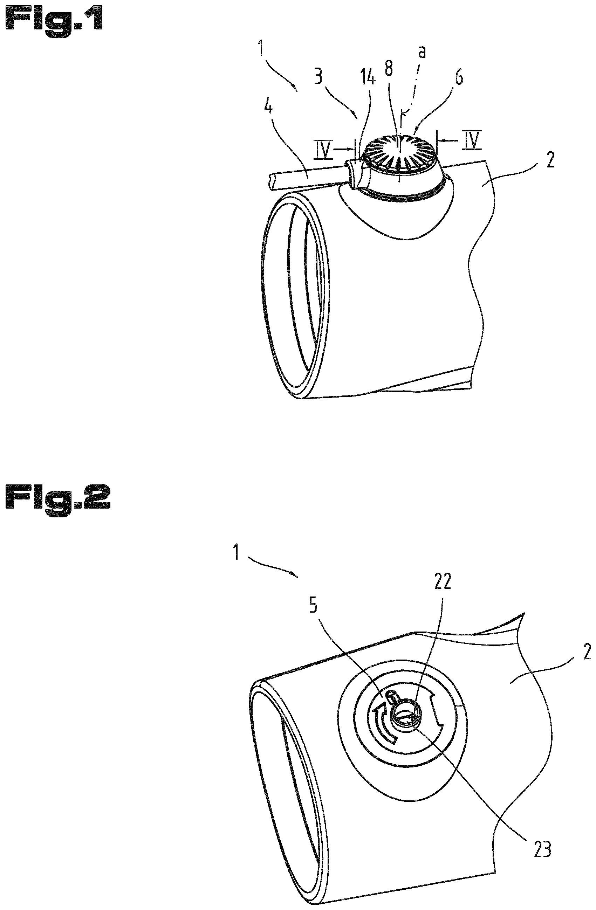

Gemäß Fig. 1 weist eine fernoptische Einrichtung 1, ein Gehäuse 2 und mindestens eine Halterung 3 für einen Riemen 4 auf. In der dargestellten Variante handelt es sich bei der fernoptischen Einrichtung um ein Fernglas bzw. Fernrohr, welches als Binokular oder Monokular ausgebildet sein kann. An dieser Stelle sei jedoch darauf hingewiesen, dass es sich bei der fernoptischen Einrichtung auch um eine Kamera, einen Entfernungsmesser, ein Teleskop oder Ähnliches handeln kann.

Üblicherweise sind zwei Halterungen 3 vorgesehen, sodass beide freien Enden des Riemens 4 an dem Gehäuse 2 fixiert werden können. Die Halterung 3 kann einen fix an dem Gehäuse 2 angeordneten ersten Teil auf, der in Fig. 2 mit dem Bezugszeichen 5 versehen ist und einen lösbar mit dem ersten Teil 5 verbindbaren zweiten Teil, der in Fig. 1 mit dem Bezugszeichen 6 gekennzeichnet ist, aufweisen. Der erste Teil 5 und der zweite Teil 6 bilden einen Bajonett-Verschluss. Die Halterung 3 ist in der dargestellten Variante in einem okularseitigen Endbereich des Gehäuses 2 angeordnet.

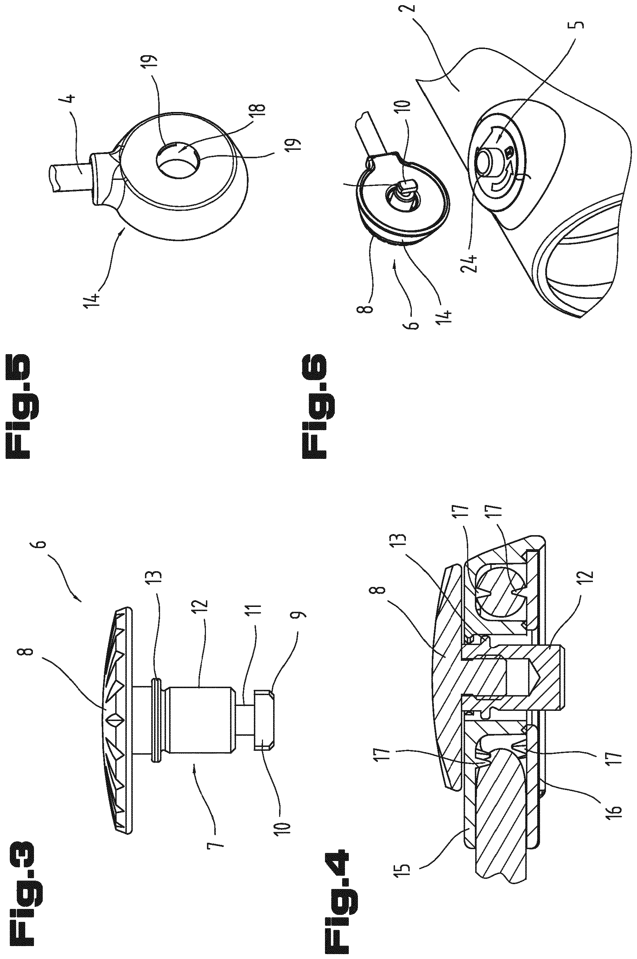

Wie aus Fig. 3 erkennbar ist, kann der zweite Teil 6 einen Schaft 7 sowie einen den Schaft 7 in radialer Richtung überragenden Kopf 8 aufweisen. Wie in Fig. 4 dargestellt, kann der Kopf 8 kann in den Schaft 7 eingeschraubt sein. Natürlich ist es auch möglich den Kopf 8, der bevorzugt aus Kunststoff gefertigt ist, mit dem günstiger Weise aus Metall hergestellten Schaft 7 auf andere Weise, beispielsweise mittels Kleben, zu verbinden.

Zudem kann der zumindest eine zweite Teil 6 gemäß Fig. 3 zwei einander gegenüberliegende Haltenasen 9, 10 aufweisen, die einstückig miteinander ausgebildet und durch ein an einer Stirnseite des Schaftes 7 angeordnetes balkenförmiges Element gebildet sein können. An dieser Stelle sei darauf hingewiesen, dass es grundsätzlich auch ausreichend wäre, an dem Schaft 7 auch nur einer von diesem in radialer Richtung abstehende Haltenase 9 oder 10 vorzusehen.

Der Schaft 7 auch kann in einem unmittelbar vor den Haltenase 9, 10 gelegenen Abschnitt 11 einen kleineren Durchmesser aufweisen, als in einem an den Abschnitt 11 in Richtung des Kopfes 8 betrachtet unmittelbar anschließenden Bereich 12. Diese Ausführungsform hat sich als sehr günstig erwiesen, um den zweiten Teil 6 mit dem ersten Teil 5 zu verbinden. Der Durchmesser des Bereichs 12 kann geringfügig kleiner sein, als der Durchmesser einer in Fig. 6 mit dem Bezugszeichen 24 versehenen, rohrförmigen Buchse, die an dem ersten Teil 5 angeordnet ist.

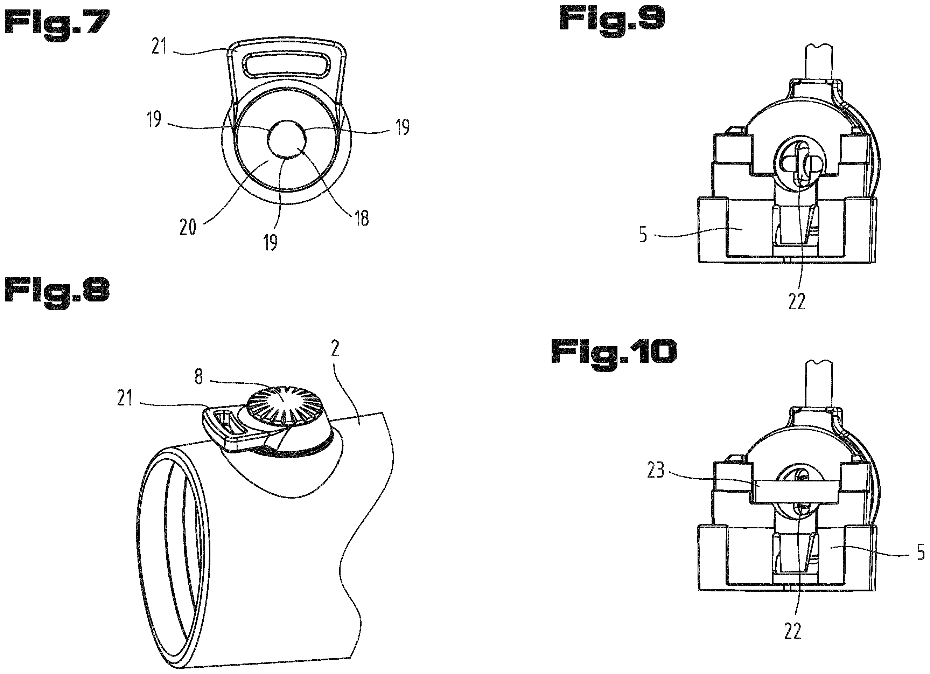

Weiters kann der Schaft 7 in einem zwischen dem Bereich 12 und dem Kopf 8 gelegenen Bereich einen in radialer Richtung abstehenden Flansch 13 aufweisen. Der Flansch 13 kann einen in Umfangsrichtung des Schaftes 7 umlaufenden Kragen bilden. Zusammen mit den in Fig. 5 und 7 dargestellten Stegen 19, welche in eine Durchtrittsöffnung 18 eines Halterungsgehäuses 14 bzw. 20 ragen, kann der Schaft 7 in dem Halterungsgehäuse 14 bzw. 20 gesichert werden. Die Stege 19 können hierbei aus einem elastomeren Material gebildet sein. Ein Durchmesser des Schaftes 7 im Bereich des Flansches 13 größer ist als ein lichter Querschnitt der Durchtrittsöffnung 18 im Bereich des zumindest einen Steges 19. Wird der Flansch 13 durch die Durchtrittsöffnung 18 bewegt, werden die Stege 19 zurückgebogen. Nach Passieren der Stege 19 bewegen sich diese wieder in ihre Ausgangsposition zurück.

In Richtung der Haltenasen 9, 10 kann sich an den Flansch 13 auch eine in dem Schaft 7 beispielsweise umlaufend ausgebildete Nut anschließen. In diese Nut können, wie in Fig. 4 dargestellt, Abschnitte des Halterungsgehäuses 14 eingreifen, um die Fixierung des Halterungsgehäuses 14 an dem Schaft 7 zu verbessern. Die in die Nut eingreifenden Abschnitte des Halterungsgehäuses 14 können, so wie die Stege 19 aus einem elastomeren Material gebildet sind. Das Halterungsgehäuse 14 und der Schaft 7 können unverlierbar miteinander zu einer Einheit verbunden sein. Das oben zu Fig. 4 Gesagte gilt natürlich auch für das in Fig. 7 dargestellte Halterungsgehäuse 20. Der Riemen 4 ist mittels des Halterungsgehäuses 14 mit dem Gehäuse 2 verbunden, wobei das Halterungsgehäuse 14 drehbar, insbesondere frei drehbar, an dem Gehäuse 2 gelagert ist. Das Halterungsgehäuse 14 kann hierbei um eine normal zur Oberfläche des Gehäuses 2 der fernoptischen Einrichtung 1 verlaufende Achse a drehbar gelagert. Besonders bevorzugt ist das Halterungsgehäuse 14 die in Fig. 6 dargestellte Buchse 24 drehbar gelagert.

Wie in Fig. 4 dargestellt, kann das Halterungsgehäuse 14 aus zwei Halbschalen 15, 16 gebildet sein, wobei der Riemen 4 zwischen den beiden Halbschalen 15, 16 eingeklemmt ist. Um den Riemen 4 zwischen den beiden Halbschalen 15, 16 zuverlässig einklemmen zu können, können an den Innenseiten der Halbschalen 15, 16 Vorsprünge 17 vorgesehen sein. Die Vorsprünge 17 können zahnartig, beispielsweise pyramidenstumpf- oder kegelstumpfartig, ausgebildet sein. Die zwei Halbschalen 15, 16 können beispielsweise miteinander verklebt oder verschweißt sein. Bevorzugt sind die beiden Halbschalen 15, 16 durch Ultraschallverschweißen mit einander verbunden.

Wie in Fig. 7 und 8 gezeigt, kann an dem Halterungsgehäuse 20 aber auch eine Öse 21 zur Befestigung des Riemens angeordnet sein.

Gemäß Fig. 9 kann der erste Teil 5 der Halterung 3 eine Durchtrittsöffnung 22 in Form eines Langloches für die zumindest eine Haltenase 9, 10 des zweiten Teils 6 aufweisen. Eine Breite der Durchtrittsöffnung 22 ist kleiner als ein Durchmesser einer Projektion der Haltenasen 9, 10 und des Schaftes 7 in eine normal zu einer Längsmittelgerade des Schaftes 7 verlaufende Ebene. Somit ist der Abstand zwischen den freien Enden der Haltenasen 9, 10 voneinander größer als die Breite der Durchtrittsöffnung 22. Die Länge der Durchtrittsöffnung 22 ist hingegen größer als der Abstand zwischen den freien Enden der Haltenasen 9, 10 um ein Durchführen derselben durch die Durchtrittsöffnung 22 zu ermöglichen. Nachdem die Haltenasen 9, 10 die Durchtrittsöffnung 22 bei einem Zusammenfügen des ersten Teils 5 und des zweiten Teils 6 passiert haben, können die Haltenase 9, 10 bzw. der Schaft 7 um 90° verdreht und so der erste Teil 5 und der zweite Teil 6 miteinander verbunden werden. In dem verbundenen Zustand liegen die Haltenasen 9, 10 an einem an einen Rand der Durchtrittsöffnung 22 anschließenden Bereich an.

Zum Lösen der Teile 5 und 6 voneinander werden die Haltenasen 9, 10 durch Drehen des Schaftes 7 um 90° wieder außer Eingriff mit den Rändern der Durchtrittsöffnung 22 gebracht und können in dieser Stellung durch die Durchtrittsöffnung 22 geführt werden.

Nach Fig. 10 kann der eine erste Teil 5 in einer Einführrichtung des Schaftes 7 durch die Durchtrittsöffnung 22 betrachtet eine nach der Durchtrittsöffnung 22 angeordnete Feder 23 aufweisen. Die Feder 23 kann beispielsweise eine Blattfeder sein. Die die Haltenasen 9, 10 des zweiten Teils 6 sind in einem verriegelten Zustand des Bajonett-Verschlusses zwischen dem an den Rand der Durchtrittsöffnung 22 anschließenden Bereich und der zumindest einen Feder 23 eingeklemmt und gegen ein ungewolltes Verdrehen gesichert.

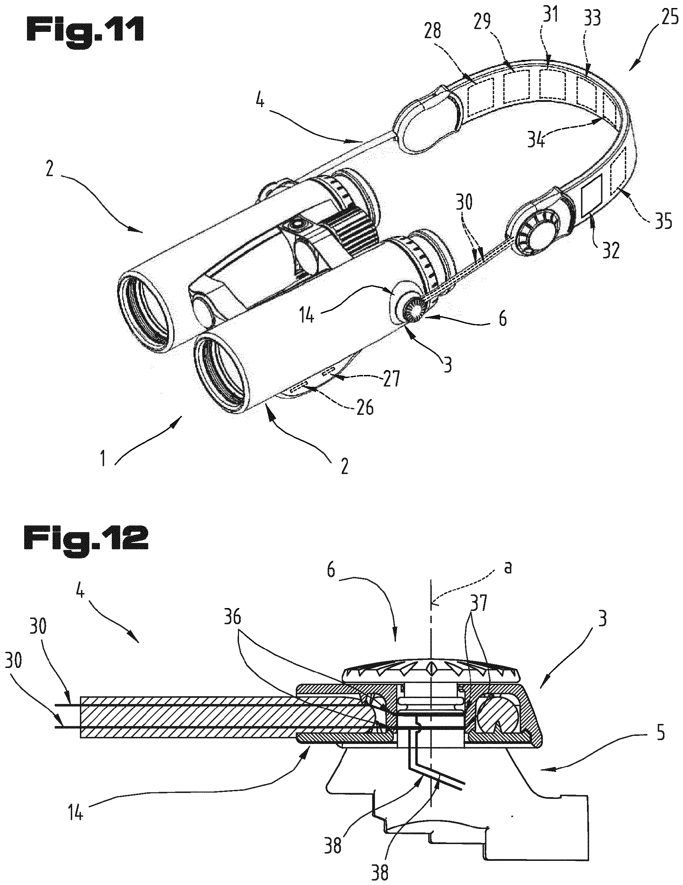

Die Fig. 11 zeigt als Ausführungsbeispiel der fernoptischen Einrichtung 1 ein Fernglas, das mit dem Riemen 4 verbunden ist. Der Riemen 4 fungiert als Tragehilfsmittel bzw. Tragegurt, dessen beide Enden mit den Halterungsgehäusen 14 jeweils an einem der beiden Gehäuse 2 des Fernglases befestigt sind. Ohne Einschränkung der Allgemeinheit umfasst der Riemen 4 gemäß diesem Ausführungsbeispiel als einen Mittelteil einen Nackengurt 25, der von einem Benutzer zum bequemen Entlasten seiner Arme zwischen Beobachtungen mit dem Fernglas um seinen Nacken geschlungen getragen wird.

Auch wenn im Folgenden nur von einem Riemen die Rede ist, so sollen darunter auch andere Tragehilfsmittel verstanden werden können. Solch ein Tragehilfsmittel kann beispielsweise auch durch einen Rucksack oder ein Kleidungsstück, wie eine Jacke gebildet sein. Insbesondere Funktionsjacken oder Westen, wie sie auch im Jagdbereich bekannt sind, können mit entsprechenden riemen- oder kordelartigen Verlängerungen ausgestattet sein, an denen Halterungsgehäuse 14 vorgesehen sind.

Erfindungsgemäß ist vorgesehen, dass das System aus dem Fernglas und dem Riemen 4 auch elektrische bzw. elektronische Komponenten umfasst. So kann beispielsweise in dem Fernglas ein Laserentfernungsmesser 26 mit einer dafür vorgesehenen Kontrolleinheit 27 vorgesehen sein. Andererseits ist in den Riemen 4 bzw. in den Nackengurt 25 des Riemens 4 eine Energieversorgungseinheit 28 integriert. Erfindungsgemäß ist nunmehr vorgesehen, dass die elektrischen bzw. die elektronischen Komponenten des Fernglases einerseits und des Riemens 4 bzw. des Nackengurts 25 andererseits miteinander verbunden sind und zumindest eine der Halterungen 3 auch Schnittstellen für die Verbindungen zwischen diesen elektrischen bzw. elektronischen Komponenten aufweist.

Beim in Fig. 11 dargestellten Ausführungsbeispiel ist beispielsweise vorgesehen, dass der Laser-Entfernungsmesser 26 und die Kontrolleinheit 27 von der Energieversorgung 28 mit dem für den Betrieb erforderlichen Strom versorgt werden. Alternativ oder zusätzlich zu der in dem Fernglas vorgesehenen Kontrolleinheit 27 kann auch in dem Riemen 4 bzw. in dem Nackengurt 25 eine Kontrolleinheit bzw. eine Steuerung 29 vorgesehen sein. Damit ist es möglich die Auswertung der von dem Laserentfernungsmesser 26 erhaltenen Daten zur Bestimmung des Wertes der Entfernung eines entfernten Objektes in der Steuerung 29 in dem Nackengurt 25 durchzuführen. Neben Leitungen 30 zur Stromversorgung der verschiedenen elektrischen Verbraucher können zur Datenübertragung separate Leitungen aber auch die Leitungen 30 zur Stromversorgung benutzt werden. Es versteht sich von selbst, dass die Energieversorgung und die Datenübermittlung auch über gemeinsame Leitungen erfolgen kann.

Zur Steuerung der Betriebszustände durch einen Benutzer ist an dem Nackengurt 25 auch eine Eingabe 31 bzw. ein Eingabeterminal vorgesehen. Die Eingabe 31 kann beispielsweise durch ein Tastenfeld gebildet sein. Vorteilhaft ist auch die Anordnung einer Anzeige 32. Die Funktionen der Eingabe 31 und der Anzeige 32 können auch in einem Touch-Screen vereint sein.

Gemäß einer Weiterbildung dieses Ausführungsbeispiels kann auch ein GPS-Empfänger 33 in dem Riemen 4 bzw. dem Nackengurt 25 angeordnet sein. Weiters ist es vorteilhaft, wenn Sensoren 34 beispielsweise zur Messung des Umgebungsluftdrucks oder der Umgebungstemperatur vorgesehen sind. Die Anordnung einer Antenne 35 ermöglicht schließlich auch die Übertragung von Daten an externe Geräte. Vorteilhafterweise ist die Antenne 35 zur Nahfeldkommunikation mittels Technologien, wie Bluetooth, WLAN oder RFID ausgebildet.

Neben oder anstelle der Antenne 35 kann auch ein Terminal zur leitungsgebundenen elektrischen Verbindung durch Stecker oder Buchsen, wie z.B. USB-Stecker, Chinch-Steckverbinder oder dergleichen, vorgesehen sein. Damit ist es auch möglich, dass die fernoptische Einrichtung bzw. die Gehäuse 2 des Fernglases über die Schnittstelle in der Halterung 3 mit externen elektronischen Komponenten verbunden ist bzw. sind.

In einer weiteren Ausführungsvariante kann beispielsweise auch ein Mikrofon (nichts dargestellt) zur Spracheingabe oder zur Eingabe von Steuerungsbefehlen an eine mit Spracherkennung ausgebildete Steuerung 29 vorgesehen sein. Mit einem Mikrofon können aber auch Memos während einer Beobachtung in einem Datenspeicher aufgezeichnet werden. Durch die Ausbildung mit einem Lautsprecher können einem Benutzer Informationen ausgegeben werden, z.B. über den Betriebsstatus der fernoptischen Einrichtung 1. Eine derartige Ausstattung mit einem Mikrofon und einem Lautsprecher ermöglicht aber auch die Aufzeichnung beispielsweise von Tierstimmen oder Vogelgesang und den Vergleich mit entsprechenden voraufgezeichneten Geräuschen.

Gemeinsam mit dem GPS-Empfänger 33 ermöglichen ein Beschleunigungssensor und ein Kompass die Bestimmung der absoluten räumlichen Lage. Gemäß einer Weiterbildung kann auch ein Vibrationsmotor zur Erzeugung eines haptischen Feedbacks vorgesehen sein. Von Vorteil ist auch die Anordnung von Solarzellen an dem Riemen 4 zum Laden der Energieversorgungseinheit 28.

Wie vorstehend ausgeführt, erfolgt die Verbindung zwischen dem Fernglas bzw. zwischen der fernoptischen Einrichtung 1 einerseits und dem Riemen 4 andererseits mit der Halterung 3, die im Wesentlichen als zylindrisches Zapfenlager ausgebildet ist. Das Halterungsgehäuse 14 mit seiner Durchtrittsöffnung 18 bildet dabei ein Lochlager, das unter Verwendung des zweiten Teils 6 (Fig. 3) an dem ersten Teil 5 des Gehäuses 2 der fernoptischen Einrichtung 1 fixiert wird (Fig. 2). Neben dieser mechanischen Verbindung zwischen der fernoptischen Einrichtung 1 und dem Riemen 4 dient die Halterung 3 erfindungsgemäß auch dazu, eine elektrische bzw. elektronische Verbindung zwischen der fernoptischen Einrichtung 1 und dem Riemen 4 herzustellen.

Die Fig. 12 zeigt einen Querschnitt einer der beiden Halterungen 3 gemäß Fig. 11. Die im Inneren des Riemens 4 verlaufenden Leitungen 30 sind bis in den Bereich der Durchtrittsöffnung 18 des Halterungsgehäuses 14 geführt und enden jeweils in einem Stromabnehmer 36. Andererseits weist die Buchse 24 des ersten Teiles 5 des Gehäuses 2 der fernoptischen Einrichtung 1 jeweils einen Schleifring 37 auf. Die Schleifringe 37 sind an einer äußeren Zylindermantelfläche der Buchse 24, in axialer Richtung gegeneinander versetzt angeordnet. Dabei sind sie derart angeordnet, dass sie jeweils mit einem der Stromabnehmer 36 des Halterungsgehäuses 14 in Kontakt stehen. Von den Schleifringen 37 führen schließlich elektrische Leitungen 38 zu elektrischen Komponenten des Fernglases bzw. der fernoptischen Einrichtung 1. Diese Ausbildung der Halterung 3 hat den Vorteil, dass das Halterungsgehäuse 14 des Riemens 4 beliebig gegenüber dem ersten Teil 5 des Gehäuses 2 des Fernglases verdreht werden kann, ohne dass dabei die elektrische Verbindung unterbrochen wird. Darüber hinaus ist vorzugsweise auch noch vorgesehen, dass die elektrische Schnittstelle bzw. die Halterung 3 wasser- und staubdicht ausgestaltet ist. Dies kann beispielsweise durch eine entsprechende Ausformung des Flansches 13 an dem zweiten Teil 6 und der Durchtrittsöffnung 18 des Halterungsgehäuses 14 erfolgen.

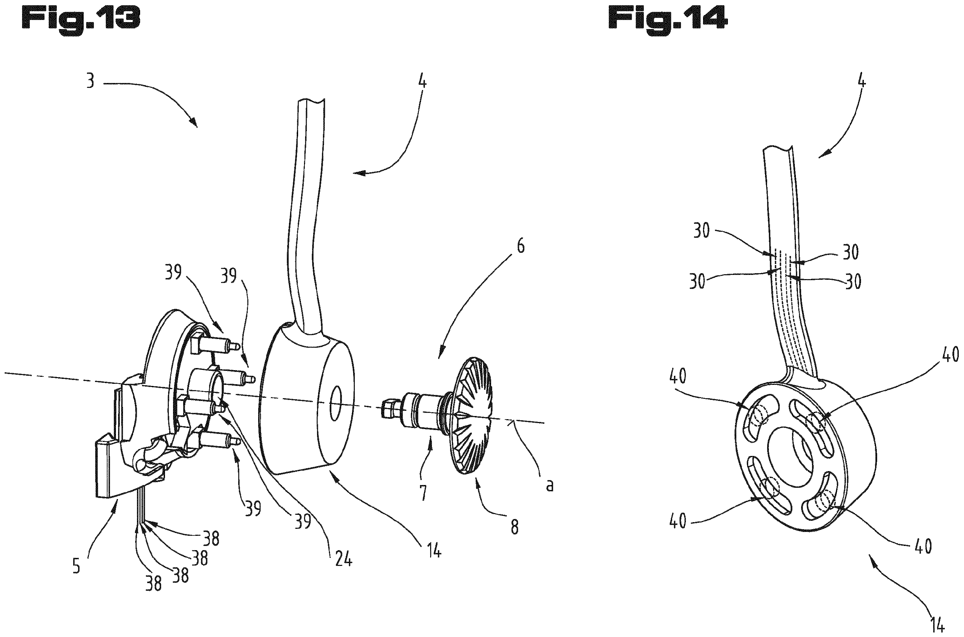

In den Fig. 13, 14 ist eine weitere und gegebenenfalls für sich eigenständige Ausführungsform der Halterung 3 zur Verbindung des Fernglases und des Riemens 4 gezeigt, wobei wiederum für gleiche Teile gleiche Bezugszeichen bzw. Bauteilbezeichnungen wie in den vorangegangenen Fig. 1 bis 12 verwendet werden. Um unnötige Wiederholungen zu vermeiden, wird auf die detaillierte Beschreibung in den vorangegangenen Abschnitten Bezug genommen.

Die Fig. 13 und 14 zeigen ein weiteres Ausführungsbeispiel der Halterung 3 zur Verbindung des Fernglases und des Riemens 4. In Fig. 13 ist die Halterung 3 dabei in Explosionsdarstellung gezeigt. In der Halterung 3 ist gemäß diesem Ausführungsbeispiel eine elektrische bzw. elektronische Schnittstelle für jeweils vier Leitungen 30, 38 ausgebildet. Dazu weisen einander zugewandte, kreisringscheibenförmige Seiten des Halterungsgehäuses 14 einerseits und des ersten Teiles 5 des Fernglases andererseits entsprechende Kontaktstellen auf. An dem ersten Teil 5 sind dazu vier Kontaktstifte 39 angeordnet, die parallel zu der Achse a ausgerichtet sind. Die Kontaktstifte 39 sind zueinander jeweils um 90° versetzt und haben relativ zu der Achse a einen gleichen radialen Abstand. Der Anordnung der Kontaktstifte 39 an dem ersten Teil 5 des Fernglases entsprechend weist das Halterungsgehäuse 14 jeweils vier bogenförmige Kontaktschlitze 40 auf. Die bogenförmige Ausbildung der Kontaktschlitze 40 erlaubt ein Verschwenken des Halterungsgehäuses 14 von etwas weniger als 90° um die Achse a. Im zusammengesetzten Zustand der Halterung 3 können die Kontaktstifte 39 in den Kontaktschlitzen 40 um einen entsprechenden Winkel bewegt werden.

Gemäß einer alternativen Variante (nicht dargestellt) dieses Ausführungsbeispiels sind einer der Kontaktstifte 39 und sein entsprechender Kontaktschlitz 40 in einem radialen Abstand von der Achse a angeordnet, der unterschiedlich ist zu dem radialen Abstand der anderen Kontaktstifte 39 und Kontaktschlitze 40. Auf diese Weise wird eine falsche Polung der elektrischen Kontakte beim Verbinden der Halterung 3 verhindert.

In einer weiteren Variante könnte schließlich auch vorgesehen sein, dass anstelle der Kontaktschlitze 40 in dem Halterungsgehäuse 14 Kontaktbuchsen ausgebildet sind (in Fig. 14 als strichliert dargestellte Löcher gezeigt). In dieser Bauform der Halterung 3 ist das Halterungsgehäuse 14 somit in seiner relativen Lage an dem ersten Teil 5 des Gehäuses 2 des Fernglases fixiert, d.h. im zusammengebauten Zustand nicht drehbar.

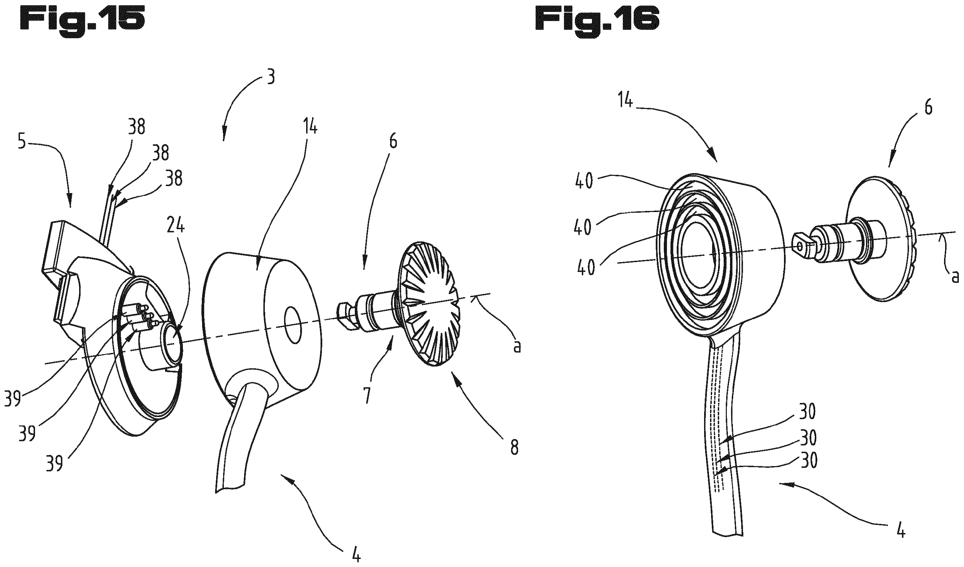

Die Fig. 15 und 16 zeigen ein weiteres alternatives Ausführungsbeispiel der Halterung 3 zur Verbindung der fernoptischen Einrichtung 1 und des Riemens 4. Die entsprechenden Teile sind dabei jeweils wieder in Explosionsdarstellung gezeigt. Die Kontaktstellen zur elektrischen Kontaktierung zwischen Fernglas einerseits und Riemen 4 andererseits sind wiederum an einander gegenüberliegenden Seiten des ersten Teiles 5 der fernoptischen Einrichtung 1 und des Halterungsgehäuses 14 des Riemens 4 angeordnet. Gemäß diesem Ausführungsbeispiel sind an dem ersten Teil 5 des Gehäuses 2 drei parallel zu der Achse a ausgerichtete Kontaktstifte 39, in radialer Richtung gegeneinander versetzt angeordnet. Dementsprechend sind in dem Halterungsgehäuse 14 des Riemens 4 an der entsprechend gegenüberliegenden Seite drei ringförmig umlaufende Kontaktschlitze 40 zur Aufnahme jeweils eines der Kontaktstifte 39 ausgebildet. So kann beim Verbinden des Halterungsgehäuses 14 mit dem ersten Teil 5 des Gehäuses 2 des Fernglases gleichzeitig der elektrische Kontakt zwischen den Kontaktstiften 39 und den Kontaktschlitzen 40 hergestellt werden. Diese Ausbildung der elektrischen Kontaktierung hat den Vorteil der freien Verdrehbarkeit des Halterungsgehäuses 14 um die Achse a bezüglich des ersten Teils 5 der fernoptischen Einrichtung 1.

Erfindungsgemäß sind auch Ausführungen mit zwei, drei oder mehr als vier Kontaktstellen (mit jeweils einem Kontaktstift 39 und einem Kontaktschlitz 40) möglich.

Bei den Ausführungsbeispielen gemäß den Fig. 15 und 16 und den Fig. 13 und 14 sind die jeweiligen Kontaktstellen an einander gegenüberliegenden kreisringscheibenförmigen Seiten des Halterungsgehäuses 14 einerseits und des ersten Teils 5 des Gehäuses 2 des Fernglases andererseits angeordnet bzw. in diese Seiten eingeformt. In einer alternativen Variante können die Kontaktstifte 39 auch an dem Halterungsgehäuse 14 und die Kontaktschlitze 40 an dem ersten Teil 5 des Gehäuses 2 des Fernglases angeordnet sein.

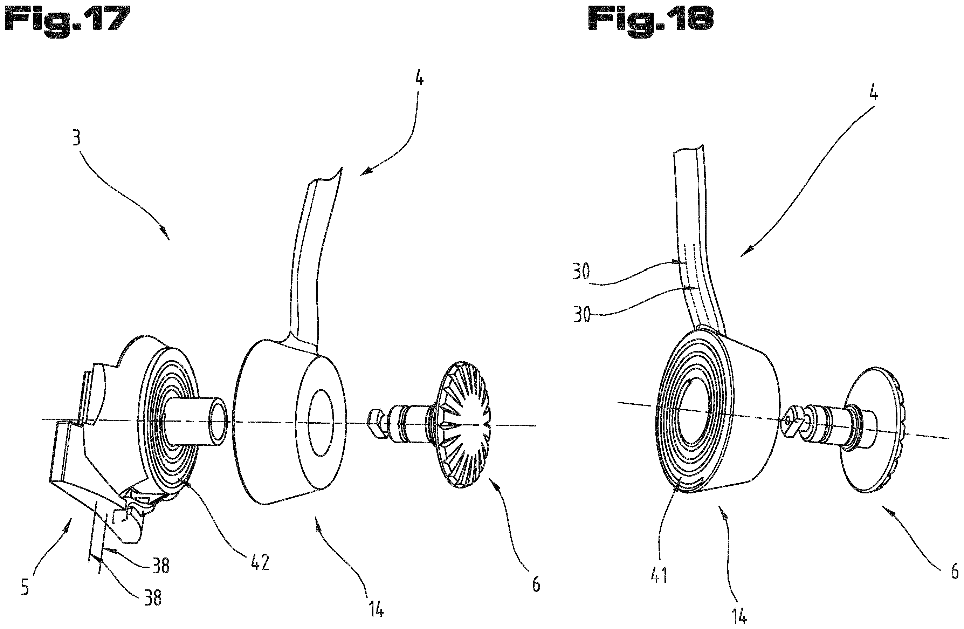

Die Fig. 17 und 18 zeigen ein weiteres Ausführungsbeispiel der Halterung 3 zwischen dem Riemen 4 und dem Fernglas, wiederum in Explosionsdarstellung. Dabei ist in die Halterung 3 eine drahtlose Energie- bzw. Signalübertragungseinheit integriert. Dazu weist das Halterungsgehäuse 14 des Riemens 4 eine erste Induktionsschleife 41 und der erste Teil 5 des Gehäuses 2 des Fernglases eine zweite Induktionsschleife 42 auf. Die Induktionsschleifen 41, 42 sind jeweils in den einander gegenüberliegenden kreisringscheibenförmigen Seiten des Halterungsgehäuses 14 einerseits und des ersten Teils 5 des Gehäuses 2 andererseits angeordnet bzw. eingeformt. Die Induktionsschleifen 41, 42 sind somit im Wesentlichen ebenflächig angeordnet.

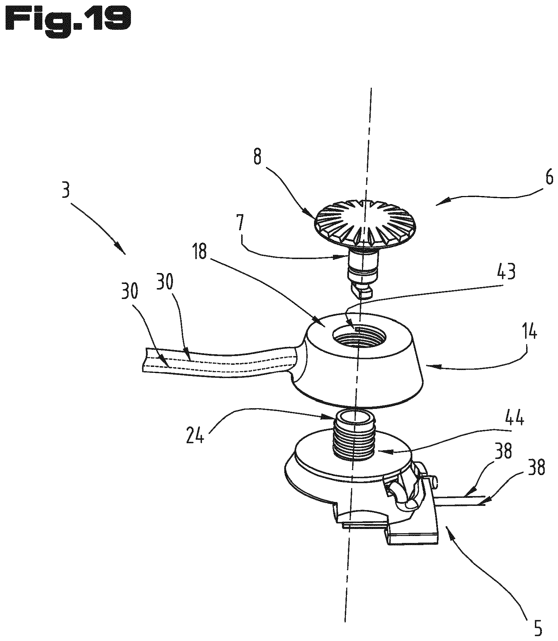

Die Fig. 19 zeigt ein weiteres Ausführungsbeispiel der Halterung 3 zur Verbindung des Riemens 4 und des Fernglases mit einer drahtlosen Schnittstelle zur Energie- bzw. Datenübertragung. Gemäß diesem Ausführungsbeispiel ist in der Durchtrittsöffnung 18 des Halterungsgehäuses 14 eine äußere Spule 43 angeordnet. Andererseits ist die Buchse 24 des ersten Teiles 5 des Gehäuses 2 des Fernglases mit einer inneren Spule 44 ausgebildet. Im miteinander verbundenen Zustand kommt die innere Spule 44 im Inneren der äußeren Spule 43 des Halterungsgehäuses 14 zu liegen, wobei die innere Spule 44 und die äußere Spule 43 zueinander koaxial angeordnet sind. Von allgemeinem Vorteil ist es dabei schließlich, wenn der Schaft 7 des zweiten Teiles 6 aus einem ferromagnetischen Werkstoff hergestellt ist, da dadurch der Schaft 7 gleichzeitig als Eisenkern wirkt und dadurch die Energie bzw. Signalübertragung verbessert werden kann.

Die Ausbildung einer drahtlosen Energie- bzw. Signalübertragung, wie in den Ausführungsbeispielen gemäß den Fig. 17 bis 19 beschrieben, hat zusätzlich den Vorteil einer erhöhten Funktionssicherheit. Wegen der elektrischen Isolierung der Induktionsschleifen 41, 42 bzw. der Spulen 43, 44 ist die Schnittstelle weniger anfällig gegenüber Störungen durch eindringende Feuchtigkeit oder Verschmutzung.

Alternativ zu den beschriebenen Ausführungsbeispielen einer induktiven Kopplung zur Energie- bzw. Signalübertragung könnte auch eine kapazitive Kopplung angewendet werden. Zur Signalübertragung wären aber auch Schnittstellen unter Verwendung von Infrarot-Strahlung oder von Lichtwellenleitern möglich.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Fernoptische Einrichtung | 31 | Eingabe |
| 2 | Gehäuse | 32 | Anzeige |
| 3 | Halterung | 33 | GPS-Empfänger |
| 4 | Riemen | 34 | Sensor |
| 5 | erster Teil | 35 | Antenne |
| 6 | zweiter Teil | 36 | Stromabnehmer |
| 7 | Schaft | 37 | Schleifring |
| 8 | Kopf | 38 | Leitung |
| 9 | Haltenase | 39 | Kontaktstift |
| 10 | Haltenase | 40 | Kontaktschlitz |
| 11 | Abschnitt | 41 | Induktionsschleife |
| 12 | Bereich | 42 | Induktionsschleife |
| 13 | Flansch | 43 | Spule |
| 14 | Halterungsgehäuse | 44 | Spule |
| 15 | Halbschale | | |
| 16 | Halbschale | | |
| 17 | Vorsprung | | |
| 18 | Durchtrittsöffnung | | |
| 19 | Steg | | |
| 20 | Halterungsgehäuse | | |
| 21 | Öse | | |
| 22 | Durchtrittsöffnung | | |
| 23 | Feder | | |
| 24 | Buchse | | |
| 25 | Nackengurt | | |
| 26 | Laser-Entfernungsmesser | | |
| 27 | Kontrolleinheit | | |
| 28 | Energieversorgung | | |
| 29 | Steuerung | | |
| 30 | Leitungen | | |

## Patentansprüche

1. Fernglas mit einem Gehäuse (2) und mit einem Tragegurt, wobei zwischen dem Gehäuse (2) und dem Tragegurt zumindest eine Halterung (3) zur mechanischen Verbindung ausgebildet ist, **dadurch gekennzeichnet, dass** die zumindest eine Halterung (3) eine Schnittstelle zur elektrischen bzw. elektronischen Verbindung zwischen dem Gehäuse (2) und dem Tragegurt umfasst, sodass sowohl die mechanische als auch die elektrische bzw. elektronische Verbindung durch eine einzige Manipulation hergestellt oder gelöst werden kann.

2. Fernglas nach Anspruch 1, **dadurch gekennzeichnet, dass** in dem Gehäuse (2) und in dem Tragegurt jeweils elektrische bzw. elektronische Komponenten angeordnet sind.

3. Fernglas nach Anspruch 1 oder 2, **dadurch gekennzeichnet, dass** der Tragegurt mit einem Halterungsgehäuse (14) der Halterung (3) verbunden und das Halterungsgehäuse (14) an dem Gehäuse (2) lösbar befestigt ist.

4. Fernglas nach Anspruch 1, **dadurch gekennzeichnet, dass** der Tragegurt an dem Gehäuse (2) drehbar oder zumindest schwenkbar befestigt ist.

5. Fernglas nach Anspruch 3 oder 4, **dadurch gekennzeichnet, dass** die zumindest eine Halterung (3) einen an dem Gehäuse (2) angeordneten ersten Teil (5) mit einer Buchse (24) umfasst, wobei das Halterungsgehäuse (14) um eine Achse (a) der Buchse (24) zumindest schwenkbar gelagert ist.

6. Fernglas nach einem der vorhergehenden Ansprüche, **dadurch gekennzeichnet, dass** die Schnittstelle zur elektrischen bzw. elektronischen Verbindung durch Kontaktstellen und im verbundenen Zustand damit in elektrischer Verbindung stehenden Kontaktstiften gebildet ist.

7. Fernglas nach einem der vorhergehenden Ansprüche 3 bis 6, **dadurch gekennzeichnet, dass** die Schnittstellen zur elektrischen bzw. elektronischen Verbindung durch Kontaktstellen, die an einander gegenüberliegenden Seiten, insbesondere an einander gegenüberliegenden, kreisringscheibenförmigen Seiten, des Halterungsgehäuses (14) und des ersten Teils (5) des Gehäuses (2) angeordnet sind, ausgebildet sind.

8. Fernglas nach Anspruch 7, **dadurch gekennzeichnet, dass** die Kontaktstellen durch Kontaktöffnungen (40), insbesondere kreisbogenförmige Kontaktöffnungen (40), und in die Kontaktöffnungen (40) hineinragende Kontaktstifte (39) ausgebildet sind.

9. Fernglas nach einem der Ansprüche 5 bis 8, **dadurch gekennzeichnet, dass** die Schnittstellen zur elektrischen bzw. elektronischen Verbindung durch Schleifringe (37) an einer äußeren Mantelfläche der Buchse (24) und durch Stromabnehmer (36) in einer Durchtrittsöffnung (18) des Halterungsgehäuses (14) ausgebildet sind.

10. Fernglas nach einem der vorhergehenden Ansprüche 3 bis 9, **dadurch gekennzeichnet, dass** die Schnittstellen zur elektrischen bzw. elektronischen Verbindung durch Induktionsschleifen (41, 42), die an einander gegenüberliegenden, kreisringscheibenförmigen Seiten des Halterungsgehäuses (14) und des ersten Teils (5) des Gehäuses (2) angeordnet sind, ausgebildet sind.

11. Fernglas nach einem der Ansprüche 5 bis 10, **dadurch gekennzeichnet, dass** die Schnittstellen zur elektrischen bzw. elektronischen Verbindung durch Spulen (43, 44), die an einer äußeren Mantelfläche der Buchse (24) und in einer Durchtrittsöffnung (18) des Halterungsgehäuses (14) und koaxial zueinander angeordnet sind, ausgebildet sind.

12. Fernglas nach einem der vorhergehenden Ansprüche, **dadurch gekennzeichnet, dass** in dem Tragegurt eine Energieversorgungseinheit (28) angeordnet ist.

13. Fernglas nach einem der vorhergehenden Ansprüche, **dadurch gekennzeichnet, dass** in dem Tragegurt eine elektronische Komponente angeordnet ist, die aus einer Gruppe, umfassend eine Steuerung (29), eine Eingabe (31), eine Anzeige (32), ein GPS-Empfänger (33), einen Temperatursensor, ein Luftdrucksensor, ein Mikrofon, einen Lautsprecher, einen Datenspeicher, einen Beschleunigungssensor, einen Kompass, einen Vibrationsmotor, Solarzellen, eine Antenne (35) und ein Terminal zur leitungsgebundenen elektrischen Verbindung, ausgewählt ist.

14. Fernglas nach einem der vorhergehenden Ansprüche, **dadurch gekennzeichnet, dass** in dem Gehäuse (2) ein Laserentfernungsmesser (26) oder eine Kamera angeordnet ist.

15. Fernglas nach einem der vorhergehenden Ansprüche 5 bis 14, **dadurch gekennzeichnet, dass** die Achse (a) der Buchse (24) normal bezüglich einer Oberfläche des Gehäuses (2) ausgerichtet ist.

16. Fernglas nach einem der Ansprüche 5 bis 15, **dadurch gekennzeichnet, dass** die zumindest eine Halterung (3) zumindest einen lösbar mit dem zumindest einen ersten Teil (5) verbindbaren zweiten Teil (6) aufweist, wobei der zumindest eine erste Teil (5) und der zumindest eine zweite Teil (6) einen Bajonett-Verschluss bilden.

17. Fernglas nach Anspruch 16, **dadurch gekennzeichnet, dass** der zumindest eine zweite Teil (6) einen Schaft (7) sowie einen den Schaft (7) in radialer Richtung überragenden Kopf (8) aufweist.

18. Fernglas nach Anspruch 17, **dadurch gekennzeichnet, dass** der zumindest eine zweite Teil (6) zumindest eine an dem Schaft (7) angeordnete und von diesem in radialer Richtung abstehende Haltenase (9, 10) aufweist.

19. Fernglas nach Anspruch 18, **dadurch gekennzeichnet, dass** der zumindest eine zweite Teil (6) zumindest zwei einander gegenüberliegende Haltenasen (9, 10) aufweist.

20. Fernglas nach Anspruch 19, **dadurch gekennzeichnet, dass** die zumindest zwei Haltenasen (9, 10) einstückig miteinander ausgebildet und durch ein an einer Stirnseite des Schaftes (7) angeordnetes balkenförmiges Element gebildet sind.

21. Fernglas nach einem der Ansprüche 17 bis 20, **dadurch gekennzeichnet, dass** der Schaft (7) in einem unmittelbar vor der zumindest einen Haltenase (9, 10) gelegenen Abschnitt (11) einen kleineren Durchmesser aufweist, als in einem an diesen Abschnitt (11) in Richtung des Kopfes (8) betrachtet unmittelbar anschließenden Bereich (12).

22. Fernglas nach einem der Ansprüche 17 bis 21, **dadurch gekennzeichnet, dass** der Schaft (7) in einem zwischen der zumindest einen Haltenase (9, 10) und dem Kopf (8) gelegenen Bereich einen in radialer Richtung abstehenden Flansch (13) aufweist, der insbesondere einen in Umfangsrichtung des Schaftes (7) umlaufenden Kragen bildet.

23. Fernglas nach einem der Ansprüche 17 bis 22, **dadurch gekennzeichnet, dass** der Schaft (7) in der Durchtrittsöffnung (18) des Halterungsgehäuses (14, 20) aufgenommen ist, wobei in einem Bereich der Durchtrittsöffnung (18) zumindest ein in die Durchtrittsöffnung (18) ragender Steg (19) aus einem elastomeren Material angeordnet ist, wobei ein Durchmesser des Schaftes (7) im Bereich des Flansches (13) größer ist als ein lichter Querschnitt der Durchtrittsöffnung (18) im Bereich des zumindest einen Steges (19).

24. Fernglas nach einem der Ansprüche 3 bis 23, **dadurch gekennzeichnet, dass** das Halterungsgehäuse (14) aus zumindest zwei Halbschalen (15, 16) gebildet ist, wobei der Tragegurt zwischen den beiden Halbschalen (15, 16) eingeklemmt ist.

25. Fernglas nach einem der Ansprüche 18 bis 24, **dadurch gekennzeichnet, dass** der zumindest eine erste Teil (5) der Halterung (3) eine Durchtrittsöffnung (22) in Form eines Langloches für die zumindest eine Haltenase (9, 10) des zumindest einen zweiten Teils (6) aufweist, wobei eine Breite der Durchtrittsöffnung (22) kleiner als ein Durchmesser einer Projektion der Haltenase (9, 10) und des Schaftes (7) in eine normal zu einer Längsmittelgerade des Schaftes (7) verlaufende Ebene ist.

26. Fernglas nach Anspruch 25, **dadurch gekennzeichnet, dass** der zumindest eine erste Teil (5), in einer Einführrichtung des Schaftes (7) durch die Durchtrittsöffnung (22) betrachtet, zumindest eine nach der Durchtrittsöffnung (22) angeordnete Feder (23), insbesondere eine Blattfeder, aufweist, wobei die zumindest eine Haltenase (9,10) des zumindest einen zweiten Teils (6) in einem verriegelten Zustand des Bajonett-Verschlusses zwischen einem an einen Rand der Durchtrittsöffnung (22) anschließenden Bereich und der zumindest einen Feder (23) eingeklemmt ist.

## Claims

1. Binoculars having a housing (2) and having a carrying strap, wherein between the housing (2) and the carrying strap at least one mount (3) is formed for mechanical connection, **characterized in that** the at least one mount (3) comprises an interface for electrical and/or electronic connection between the housing (2) and the carrying strap, such that both the mechanical and the electrical and/or electronic connection may be established or released by a single manipulation.

2. The binoculars according to claim 1, **characterized in that** electrical and/or electronic components are arranged in the housing (2) and in the carrying strap in each case.

3. The binoculars according to claim 1 or 2, **characterized in that** the carrying strap is connected to a mount housing (14) of the mount (3) and the mount housing (14) is connected releasably to the housing (2).

4. The binoculars according to claim 1, **characterized in that** the carrying strap is secured rotatably or a least pivotably on the housing (2).

5. The binoculars according to claim 3 or 4, **characterized in that** the at least one mount (3) comprises a first part (5) with a socket (24) arranged on the housing (2), wherein the mount housing (14) is mounted at least pivotably about an axis (a) of the socket (24).

6. The binoculars according to one of the preceding claims, **characterized in that** the interface to the electrical and/or electronic connection is formed by contact points and in the connected state by contact pins connected electrically to the latter.

7. The binoculars according to one of claims 3 to 6, **characterized in that** the interfaces for electrical and/or electronic connection are formed by contact points, which are arranged on opposite sides, in particular on opposite, circular ring disc-shaped sides, of the mount housing (14) and the first part (5) of the housing (2).

8. The binoculars according to claim 7, **characterized in that** the contact points are formed by contact openings (40), in particular circular arc-shaped contact openings (40), and contact pins (39) projecting into the contact openings (40).

9. The binoculars according to one of claims 5 to 8, **characterized in that** the interfaces to the electrical and/or electronic connection are formed by slip rings (37) on an outer casing surface of the socket (24) and by electricity consumers (36) in a passage opening (18) of the mount housing (14).

10. The binoculars according to one of the preceding claims 3 to 9, **characterized in that** the interfaces to the electrical and/or electronic connection are formed by induction loops (41, 42), which are arranged on opposite circular ring-shaped sides of the mount housing (14) and the first part (5) of the housing (2).

11. The binoculars according to one of claims 5 to 10, **characterized in that** the interfaces to the electrical and/or electronic connection are formed by coils (43, 44), which are arranged on an outer casing surface of the socket (24) and in a passage opening (18) of the mount housing (14) and coaxially to one another.

12. The binoculars according to one of the preceding claims, **characterized in that** a power supply unit (28) is arranged in the carrying strap.

13. The binoculars according to one of the preceding claims, **characterized in that** in the carrying strap an electronic component is arranged which is selected from a group comprising a controller (29), an input (31), a display (32), a GPS receiver (33), a temperature sensor, an air pressure sensor, a microphone, a loudspeaker, a data memory, an acceleration sensor, a compass, a vibration motor, solar cells, an antenna (35) and a terminal for the wired electrical connection.

14. The binoculars according to one of the preceding claims, **characterized in that** a laser range finder (26) or camera is arranged in the housing (2).

15. The binoculars according to one of claims 5 to 14, **characterized in that** the axis (a) of the socket (24) is aligned to be normal to a surface of the housing (2).

16. The binoculars according to one of claims 5 to 15, **characterized in that** the at least one mount (3) has at least one second part (6) which can be connected releasably to the at least one first part (5), wherein the at least one first part (5) and the at least one second part (6) form a bayonet-closure.

17. The binoculars according to claim 16, **characterized in that** the at least one second part (6) has a shaft (7) and a head (8) projecting over the shaft (7) in radial direction.

18. The binoculars according to claim 17, **characterized in that** the at least one second part (6) has at least one holding nose (9, 10) arranged on the shaft (7) and protruding from the latter in radial direction.

19. The binoculars according to claim 18, **characterized in that** the at least one second part (6) has at least two opposite holding noses (9, 10).

20. The binoculars according to claim 19, **characterized in that** the at least two holding noses (9, 10) are designed in one piece with one another and are formed by a beam-like element arranged on an end side of the shaft (7).

21. The binoculars according to one of claims 17 to 20, **characterized in that** in a section (11) arranged immediately in front of the at least one holding nose (9, 10), the shaft (7) has a smaller diameter than in an area (12) immediately adjoining said section (11) as viewed in the direction of the head (8).

22. The binoculars according to one of claims 17 to 21, **characterized in that** the shaft (7), in an area between the at least one holding nose (9, 10) and the head (8), has a flange (13) protruding in radial direction, which in particular forms a collar running in circumferential direction of the shaft (7).

23. The binoculars according to one of claims 17 to 22, **characterized in that** the shaft (7) is mounted in the passage opening (18) of the mount housing (14, 20), wherein in an area of the passage opening (18) at least one web (19) is arranged which projects into the passage opening (18) and is made from an elastomer material, wherein a diameter of the shaft (7) is greater in the region of the flange (13) than a clear cross-section of the passage opening (18) in the region of the at least one web (19).

24. The binoculars according to one of claims 3 to 23, **characterized in that** the mount housing (14) is formed by at least two half-shells (15, 16), wherein the carrying strap is clamped between the two half-shells (15, 16).

25. The binoculars according to one of claims 18 to 24, **characterized in that** the at least one first part (5) of the mount (3) has a passage opening (22) in the form of an elongated hole for the at least one holding nose (9, 10) of the at least one second part (6), wherein a width of the passage opening (22) is smaller than a diameter of a projection of the holding nose (9, 10) and the shaft (7) in a plane normal to a longitudinal central straight line of the shaft (7).

26. The binoculars according to claim 25, **characterized in that** the at least one first part (5), as viewed in an insertion direction of the shaft (7) through the passage opening (22), has at least one spring (23), in particular a flat spring, arranged after the passage opening (22), wherein the at least one holding nose (9, 10) of the at least one second part (6) is clamped in a locked state of the bayonet-closure between a section adjoining an edge of the passage opening (22) and the at least one spring (23).

## Revendications

1. Jumelles avec un boîtier (2) et avec une sangle, dans lesquelles, entre boîtier (2) et la sangle, se trouve au moins un support (3) de liaison mécanique, **caractérisées en ce que** l'au moins un support (3) comprend une interface pour liaison électrique ou électronique entre le boîtier (2) et la sangle, de façon à ce qu'aussi bien la liaison mécanique que la liaison électrique ou électronique puissent être établies ou détachées par une simple manipulation.

2. Jumelles selon la revendication 1, **caractérisées en ce que**, dans le boîtier (2) et dans la sangle, sont disposés des composants électriques ou électroniques.

3. Jumelles selon la revendication 1 ou 2, **caractérisées en ce que** la sangle est reliée avec un boîtier de support (14) du support (3) et le boîtier de support (14) est fixé de manière amovible au boîtier (2).

4. Jumelles selon la revendication 1, **caractérisées en ce que** la sangle est fixée au boîtier (2) de manière rotative ou au moins pivotante.

5. Jumelles selon la revendication 3 ou 4, **caractérisées en ce que** l'au moins un support (3) comprend une première partie (5), disposée sur le boîtier (2), avec une douille (24), dans lesquelles le boîtier de support (14) est logé de manière au moins pivotante autour d'un axe (a) de la douille (24).

6. Jumelles selon l'une des revendications précédentes, **caractérisées en ce que** l'interface de liaison électrique ou électronique est constituée de points de contact et, dans l'état relié, des broches de contacts en liaison électrique avec ceux-ci.

7. Jumelles selon l'une des revendications précédentes 3 à 6, **caractérisées en ce que** les interfaces de liaison électrique ou électronique sont constituées de points de contact qui sont disposés au niveau de côtés opposés entre eux, plus particulièrement au niveau de côtés, opposés entre eux, en forme de disques annulaires, du boîtier de support (14) et de la première partie (5) du boîtier (2).

8. Jumelles selon la revendication 7, **caractérisées en ce que** les points de contact sont constitués d'ouvertures de contact (40), plus particulièrement des ouvertures de contact (40) en forme d'arcs de cercles, et de broches de contact (39) pénétrant dans les ouvertures de contact (40).

9. Jumelles selon l'une des revendications 5 à 8, **caractérisées en ce que** les interfaces de liaison électrique ou électronique sont constituées de bagues collectrices (37) sur une surface d'enveloppe externe de la douille (24) et de collecteurs de courant (36) dans une ouverture de passage (18) du boîtier de support (14).

10. Jumelles selon l'une des revendications 3 à 9, **caractérisées en ce que** les interfaces de liaison électrique ou électronique sont constituées de boucle d'induction (41, 42) qui sont disposées sur des côtés, opposés entre eux, en forme de disques annulaires, du boîtier de support (14) et de la première partie (5) du boîtier (2).

11. Jumelles selon l'une des revendications 5 à 10, **caractérisées en ce que** les interfaces de liaison électrique ou électronique sont constituées de bobines (43, 44), qui sont disposées sur une surface d'enveloppe externe de la douille (24) et dans une ouverture de passage (18) du boîtier de support (14) et de manière coaxiale entre elles.

12. Jumelles selon l'une des revendications précédentes, **caractérisées en ce que**, dans la sangle, est disposée une unité d'alimentation en énergie (28).

13. Jumelles selon l'une des revendications précédentes, **caractérisées en ce que**, dans la sangle, est disposé un composant électronique qui est sélectionné dans un groupe comprenant une commande (29), une entrée (31), un affichage (32), un récepteur GPS (33), un capteur de température, un capteur de pression d'air, un microphone, un haut-parleur, une mémoire de données, un capteur d'accélération, une boussole, un moteur à vibrations, des cellules photovoltaïques, une antenne (35) et un terminal pour la liaison électrique filaire.

14. Jumelles selon l'une des revendications précédentes, **caractérisées en ce que**, dans le boîtier (2), est disposé un télémètre laser (26) ou une caméra.

15. Jumelles selon l'une des revendications précédentes 5 à 14, **caractérisées en ce que** l'axe (a) de la douille (24) est orienté perpendiculairement à une surface du boîtier (2).

16. Jumelles selon l'une des revendications 5 à 15, **caractérisées en ce que** l'au moins un support (3) comprend au moins une deuxième partie (6) pouvant être reliée de manière amovible avec l'au moins une première partie (5), dans lesquelles l'au moins une première partie (5) et l'au moins une deuxième partie (6) forment une fermeture à baïonnette.

17. Jumelles selon la revendication 16, **caractérisées en ce que** l'au moins une deuxième partie (6) comprend une tige (7) ainsi qu'une tête (8) dépassant dans la direction radiale de la tige (7).

18. Jumelles selon la revendication 17, **caractérisées en ce que** l'au moins une deuxième partie (6) comprend au moins un embout de maintien (9, 10) disposé sur la tige (7) et s'écartant de celle-ci dans la direction radiale.

19. Jumelles selon la revendication 18, **caractérisées en ce que** l'au moins une deuxième partie (6) comprend au moins deux embouts de maintien (9, 10) opposés entre eux.

20. Jumelles selon la revendication 19, **caractérisées en ce que** les au moins deux embouts de maintien (9, 10) sont réalisés d'une seule pièce et sont constitués d'un élément en forme de barre disposé sur un côté frontal de la tige (7).

21. Jumelles selon l'une des revendications 17 à 20, **caractérisées en ce que** la tige (7) présente, dans une portion (11) disposée immédiatement avant l'au moins un embout de maintien (9, 10), un diamètre plus petit que dans une zone (12) suivant immédiatement cette portion (11), vue en direction de la tête (8).

22. Jumelles selon l'une des revendications 17 à 21, **caractérisées en ce que** la tige (7) comprend, dans une zone disposée entre l'au moins un embout de maintien (9, 10) et la tête (8), une bride (13) s'écartant dans la direction radiale, qui constitue plus particulièrement un col s'étendant dans la direction circonférentielle de la tige (7).

23. Jumelles selon l'une des revendications 17 à 22, **caractérisées en ce que** la tige (7) est logée dans l'ouverture de passage (18) du boîtier de support (14, 20), dans lesquelles, dans une zone de l'ouverture de passage (18), est disposée au moins une nervure (19) dépassant dans l'ouverture de passage (18), en matériau élastomère, dans lesquelles un diamètre de la tige (7) au niveau de la bride (13) est plus grand qu'une section transversale intérieure de l'ouverture de passage (18) au niveau de l'au moins une nervure (19).

24. Jumelles selon l'une des revendications 3 à 23, **caractérisées en ce que** le boîtier de maintien (14) est constitué de deux demi-coques (15, 16), dans lesquelles la sangle est coincée entre les deux demi-coques (15, 16).

25. Jumelles selon l'une des revendications 18 à 24, **caractérisées en ce que** l'au moins une première partie (5) du support (3) comprend une ouverture de passage (22) sous la forme d'un trou oblong pour l'au moins un embout de maintien (9, 10) de l'au moins une deuxième partie (6), dans lesquelles une largeur de l'ouverture de passage (22) est plus petite qu'un diamètre d'une projection de l'embout de maintien (9, 10) et de la tige (7) dans un plan perpendiculaire à une droite centrale longitudinale de la tige (7).

26. Jumelles selon la revendication 25, **caractérisées en ce que** l'au moins une première partie (5), vue dans une direction d'introduction de la tige (7) à travers l'ouverture de passage (22), comprend au moins un ressort (23) disposé après l'ouverture de passage (22), plus particulièrement un ressort à lame, dans lesquelles l'au moins un embout de maintien (9, 10) de l'au moins une deuxième partie (6) est coincé, dans un état verrouillé de la fermeture à baïonnette, entre une zone se raccordant à un bord de l'ouverture de passage (22) et l'au moins un ressort (23).
